# EUROPÄISCHE PATENTANMELDUNG

(11) **EP 4 306 998 A1**
(43) Veröffentlichungstag der Anmeldung: **17.01.2024**
(21) Anmeldenummer: 23179170.8
(22) Anmeldetag: 14.06.2023
(51) Int. Cl.: G01S 7/487, G01S 17/10, G01S 17/42

(54) **OPTISCHER SENSOR**

(30) Priorität: 13.07.2022 DE 202022103929 U
(71) Anmelder: Leuze electronic GmbH + Co. KG, 73277 Owen/Teck (DE)
(72) Erfinder: Karaduman, Metin, 73278 Schlierbach (DE); Mullis, Moritz, 73230 Kirchheim unter Teck (DE); Ottenbacher, Thomas, 73773 Aichwald (DE)
(74) Vertreter: Ruckh, Rainer Gerhard

(57) **Zusammenfassung**

Die Erfindung betrifft einen optischen Sensor (1) mit einem Lichtimpulse emittierenden Sender (3), einem Lichtimpulse empfangenden Empfänger (4) und mit einer Auswerteeinheit (5) in welcher aus der Laufzeit von Lichtimpulsen zu einem Objekt (9) und zurück zum Empfänger (4) eine Objektdistanz ermittelt wird. Es sind elektronische Diskriminatormittel vorhanden, mittels derer in einem am Ausgang des Empfängers (4) anstehenden analogen Empfangssignal ein Empfangssignalpuls (E) aus einer Folge von Empfangssignalpulsen (E), die durch einen Lichtimpuls des Sensors (1) generiert sind, ausblendbar ist.

## Beschreibung

Die Erfindung betrifft einen optischen Sensor gemäß dem Oberbegriff des Anspruchs 1.

Derartige optische Sensoren bilden Entfernungsmesssysteme mittels derer Distanzen von Objekten bestimmbar sind. Die Entfernungsmessungen erfolgen nach einem Impuls-Laufzeit-Verfahren. Hierzu ist ein Sender vorgesehen, der Sende-licht in Form von Lichtimpulsen emittiert. Weiterhin sind ein Lichtimpuls empfangender Empfänger und eine Auswerteeinheit zur Auswertung von Empfangssignalen des Empfängers vorgesehen.

Zur Distanzmessung wird die Laufzeit eines vom Sender emittierten Lichtimpulses zu einem zu detektierenden Objekt und zurück zum Empfänger bestimmt. Aus dieser Laufzeit wird in der Auswerteeinheit die Objektdistanz berechnet.

Derartige optische Sensoren werden in unterschiedlichen industriellen Applikationen eingesetzt, insbesondere auch zur Überwachung von Maschinen und Anlagen. Der optische Sensor kann dabei ein Distanzsensor sein, dessen Sender Lichtimpulse entlang einer feststehenden, d.h. unveränderlichen Strahlachse emittiert. Weiterhin kann der optische Sensor ein Flächendistanzsensor sein, d.h. er ist als scannender Distanzsensor ausgebildet, mit dem ein flächiger oder räumlicher Bereich überwacht wird.

Ein Problem bei derartigen optischen Sensoren besteht darin, dass durch Teilreflexionen des Sendelichts an transparenten Objekten oder auch an Objekten mit hochreflektierenden Oberflächen im Empfangssignal Störsignale vorhanden sind, die von den Nutzsignalen bei Durchführung von Objektdetektionen überlagert sind. Dies kann zu Fehlermessungen der optischen Sensoren führen.

Der Erfindung liegt die Aufgabe zugrunde einen optischen Sensor der eingangs genannten Art bereitzustellen, der unempfindlich gegen Störungen ist und zudem eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor mit einem Lichtimpulse emittierenden Sender, einem Lichtimpulse empfangenden Empfänger und mit einer Auswerteeinheit in welcher aus der Laufzeit von Lichtimpulsen zu einem Objekt und zurück zum Empfänger eine Objektdistanz ermittelt wird. Es sind elektronische Diskriminatormittel vorhanden, mittels derer in einem am Ausgang des Empfängers anstehenden analogen Empfangssignal ein Empfangssignalpuls aus einer Folge von Empfangssignalpulsen, die durch einen Lichtimpuls des Sensors generiert sind, ausblendbar ist.

Erfindungsgemäß können mit den elektronischen Diskriminatormitteln gezielt Empfangssignale ausgeblendet werden, um optische Störeinflüsse zu eliminieren oder um eine Objektdetektion in vorgegebenen Bereichen zu ermöglichen.

Ein wesentlicher Aspekt der Erfindung besteht darin, dass die Ausblendung von Empfangssignalpulsen im analogen Empfangssignal erfolgt, d.h. vor der Digitalisierung des Empfangssignalpulses und dessen Einlesens in die Auswerteeinheit.

Dies ist insbesondere dann vorteilhaft, wenn auf einen vom Sender ausgesendeten Lichtimpuls mehrere Lichtimpulse am Empfänger registriert werden, die nicht nur von einem Objekt stammen, sondern ggf. durch Störungen verursacht sind.

Nach einem empfangenden Empfangssignalpuls ist die nachfolgende Auswertung für eine bestimmte Totzeit inaktiv, d.h. aus einer Folge von Empfangssignalpulsen können dann nicht alle Empfangssignalpulse dieser Folge ausgewertet werden.

Durch Ausblendung störender Empfangssignalpulse im analogen Empfangssignal ist gewährleistet, dass die Nutzsignale bildenden Empfangssignalpulse sicher ausgewertet werden können, d.h. die Funktionssicherheit des optischen Sensors wird dadurch erhöht.

Gemäß einer ersten Variante der Erfindung wird auf das Aussenden eines Lichtimpulses am Empfänger eine Folge von mehreren Lichtimpulsen registriert, d.h. das dadurch generierte Empfangssignal enthält mehrere Empfangssignalpulse.

Erfindungsgemäß werden dann die von Störungen stammenden Empfangssignalpulse in dieser Folge ausgeblendet, so dass nur noch ein von einem zu detektierenden Objekt stammender Empfangssignalpuls nicht ausgeblendet und für eine Distanzbestimmung des Objekts herangezogen wird.

Insbesondere ist der optische Sensor derart ausgebildet, dass dessen Komponenten in einem Gehäuse mit einer Frontscheibe integriert sind, wobei die Lichtimpulse durch die Frontscheibe geführt sind.

In diesem Fall können durch Rückreflexionen von Lichtimpuls-Anteilen an der Frontscheibe generierte Empfangssignalpulse mittels den elektronischen Diskriminatormitteln ausgeblendet werden.

Damit wird erreicht, dass durch eine teilweise Rückreflektion der Lichtimpulse generierte Empfangssignalpulse im analogen Empfangssignal eliminiert werden, wodurch diese Störeinflüsse nicht zu Fehlmessungen führen.

Gemäß einer zweiten Variante der Erfindung kann eine Distanzbereichsausblendung durchgeführt werden.

Generell können durch Ausblendung eines oder mehrerer Empfangssignalpulse Objekte in einem oder mehreren Distanzfenstern von der Objekterfassung ausgeschlossen werden.

Damit erfolgt eine Objektdetektion des optischen Sensors nur noch in den nicht ausgeblendeten Distanzbereichen. Die Funktionalität des optischen Sensors kann somit gezielt vorgegeben werden.

Beispielsweise ist mittels den elektronischen Diskriminatormitteln eine Hintergrundausblendung durchführbar.

Eine derartige Hintergrundausblendung ist beispielsweise dann sinnvoll, wenn mit dem optischen Sensor Objekte vor stationären Hintergrundobjekten wie Maschinen und Anlagen erkannt werden sollen. Damit nur die Objekte detektiert werden, nicht aber Hintergrundobjekte, können diese Hintergrundobjekte, deren Lagen bekannt sind oder in Einlernvorgängen eingelernt werden können, mittels der elektronischen Diskiminatormittel, ausgeblendet werden.

Entsprechend ist es auch möglich, mittels den elektronischen Diskriminatormitteln eine Vordergrundausblendung durchzuführen, wobei dann Vordergrundobjekte mittels den elektronischen Diskriminatormitteln ausgeblendet werden, d.h. Objekte, die in einem Vordergrundbereich angeordnet sind, werden nicht detektiert.

Gemäß einer besonders vorteilhaften Ausgestaltung können durch Ausblendung von Empfangssignalpulsen mittels den elektronischen Diskriminatormitteln Muting-Bereiche generierbar sein.

Diese Variante eignet sich für sicherheitstechnische Applikationen, in denen der optische Sensor als Sicherheitssensor ausgebildet ist. Der optische Sensor weist dann einen fehlersicheren Aufbau auf, was beispielsweise durch eine redundante Auswerteeinheit in Form zweier sich zyklisch überwachender Rechnereinheiten realisiert werden kann.

Der optische Sensor wird dann vorteilhaft zur Überwachung einer gefahrbringenden Anlage oder Maschine eingesetzt, insbesondere einem Überwachungsbereich, wie einem Gefahrenbereich an oder Zugang zur Anlage oder Maschine. Wird mit dem optischen Sensor ein Eingriff eines sicherheitskritischen Objekts, beispielsweise einer Person, in den Überwachungsbereich registriert, generiert der optische Sensor ein Ausgangssignal, mit dem eine Sicherheitsfunktion ausgelöst wird. Beispielsweise wird als Sicherheitsfunktion ein Abschalten der Anlage oder Maschine ausgelöst.

Um zulässige Objekte wie Transportgüter der Anlage oder Maschine durch den Überwachungsbereich der Anlage oder Maschine zuführen zu können, wird eine Muting-Funktion derart generiert, dass temporär Muting-Bereiche innerhalb des Überwachungsbereichs generiert werden. Durch die Muting-Bereiche können zulässige Objekte durch den Überwachungsbereich der Maschine oder Anlage zugeführt werden, ohne dass dabei der optische Sensor die Sicherheitsfunktion auslöst, d.h. der optische Sensor wird temporär gemutet.

Diese Muting-Bereiche können mit den elektronischen Diskriminatormitteln vorgegeben werden, in dem Empfangssignalpulse, die innerhalb der Distanzbereiche der Muting-Bereiche liegen, ausgeblendet werden. Dies bedeutet, dass Empfangssignale, die von Objekten innerhalb der Muting-Bereiche stammen, nicht ausgewertet werden und damit auch nicht zum Auslösen der Sicherheitsfunktion führen.

Gemäß einer ersten Variante der Erfindung wird mittels den elektronischen Diskriminatormitteln ein Auslöschpuls generiert, wobei ein Empfangssignalpuls durch Überlagerung mit dem Auslöschpuls ausgelöscht wird.

Die Überlagerung erfolgt derart, dass der Empfangssignalpuls mit dem Auslöschpuls vollständig oder zumindest insoweit ausgelöscht wird, dass er in einer nachfolgenden Auswertung des Empfangssignalpulses nicht mehr als solcher erkannt wird.

Beispielsweise wird in einer nachgelagerten Auswertung ein Empfangssignalpuls als Signal dadurch erkannt, dass dessen Amplitude eine vorgegebene Triggerschwelle, d.h. einen vorgegebenen Schwellwert überschreitet.

Durch den Auslöschpuls wird dann der Empfangssignalpuls soweit ausgelöscht, dass das resultierende Empfangssignal unter der Triggerschwelle liegt.

Vorteilhaft weist der Auslöschpuls eine größere Pulsbreite als der Empfangssignalpuls auf.

Dadurch wird ein vollständiges Auslöschen eines Empfangssignalpulses mit einem Auslöschpuls gewährleistet.

Mit mehreren Auslöschpulsen können auch mehrere Empfangssignalpulse im Empfangssignal ausgeblendet werden.

Gemäß einer zweckmäßigen Ausgestaltung wird der Auslöschpuls aus einem Ansteuersignal des Senders generiert.

Für den Fall, dass der Sender eine Laserdiode ist, die von einem Lasertreiber gesteuert ist, generiert der Lasertreiber das Ansteuersignal.

Je nachdem, welcher Distanzbereich mit den elektronischen Diskriminatormitteln ausgeblendet werden soll, wird der Auslöschpuls in den elektronischen Diskriminatormitteln entsprechend verzögert.

Hierzu können vorteilhaft zur Verzögerung des Auslöschpulses Ringoszillatoren vorgesehen sein.

Die Distanz eines Objekts wird in der Auswerteeinheit bei bekannter Lichtgeschwindigkeit aus der Laufzeit eines Lichtimpulses zum Senden vom Objekt und zurück zum Empfänger berechnet.

Durch die Verzögerung eines Auslöschpuls um eine gewisse Verzögerungszeit kann damit exakt ein Lichtimpuls von einen Objekt in einer bestimmten Entfernung ausgebildet werden, in dem die Verzögerungszeit an die jeweilige Laufzeit angepasst wird.

Die auszublendenden Distanzbereiche können so exakt vorgegeben werden, insbesondere auch mit weiteren Auslöschpulsen.

Vorteilhaft ist der Auslöschpuls über eine Vorspannung des Empfängers einkoppelbar.

Der Auslöschpuls wird somit direkt vom analogen Empfangssignal überlagert.

Gemäß einer zweiten Variante der Erfindung kann der Empfangssignalpuls oder eine Anzahl von Empfangssignalpulsen eines Empfangssignals durch eine Variation der Verstärkung ausgeblendet werden.

Alternativ oder zusätzlich kann die Ausblendung eines Empfangspulses oberhalb einer Triggerschwelle in einem vorgegebenen Zeitintervall durch die Dämpfung des Empfängers erfolgen.

Zweckmäßig erfolgt die Dämpfung des Empfängers durch die betragsmäßige Absenkung dessen Bias-Vorspannung.

Alternativ oder zusätzlich wird ein Empfangssignalpuls dadurch ausgeblendet, dass er in der Auswerteeinheit nicht weiterverarbeitet wird.

Die auszublendenden Bereiche können generell durch Parametrierung des optischen Sensors oder durch Einlernvorgänge vorgegeben werden. Wird zur Distanzermittlung ein Histogramm aus gemessenen Laufzeiten erzeugt, so kann man dieses Histogramm dazu verwenden, nicht relevante Objekte bereits im Vorfeld auszublenden, was den Rechenaufwand bei der späteren Auswertung reduziert.

Gemäß einer ersten Variante ist der optische Sensor ein Distanzsensor, bei welchem die Lichtimpulse entlang einer feststehenden Strahlachse emittiert werden.

Damit wird mit dem optischen Sensor ein quasi eindimensionaler Überwachungsbereich überwacht.

Gemäß einer zweiten Variante ist der optische Sensor ein Flächendistanzsensor, bei welchem die Lichtimpulse periodisch innerhalb eines flächigen oder räumlichen Überwachungsbereichs geführt werden.

Vorteilhaft ist bei dem erfindungsgemäßen optischen Sensor, der Empfänger ein SiPM (Silizium-Photomultiplier).

Alternativ ist der Empfänger eine APD (Avalanche-Photodiode).

Gemäß einer weiteren Alternative ist der Empfänger eine SPAD (Einzelphoton-Avalanche-Diode).

Die Funktionalität des optischen Sensors kann dahingehend erweitert sein, dass dieser mehrere Empfänger aufweist, die ein Empfänger-Array bilden.

Die Erfindung wird im Folgenden anhand der Zeichnungen erläutert. Es zeigen
- Figur 1:: Ausführungsbeispiel des erfindungsgemäßen optischen Sensors
a) erste Variante.
b) zweite Variante.
- Figur 2:: Weiteres Ausführungsbeispiel des erfindungsgemäßen optischen Sensors.
- Figur 3:: Blockschaltbild des optischen Sensors gemäß den Figuren 1 oder 2.
- Figur 4:: Zeitdiagramm eines Sendepulses mit zugehörigem Empfangssig-nalpuls.
- Figur 5:: Zeitdiagramm eines Sendepulses mit zugehörigem Empfangssignalpuls und einem Auslöschpuls
a) erste Variante.
b) zweite Variante.
- Figur 6:: Zeitdiagramm eines Sendepulses mit zwei zugehörigen Empfangssignalpulsen und einem Auslöschpuls.
- Figur 7:: Erstes Applikationsbeispiel für den optischen Sensor gemäß Figur 1.
- Figur 8:: Zweites Applikationsbeispiel für den optischen Sensor gemäß Figur 1.

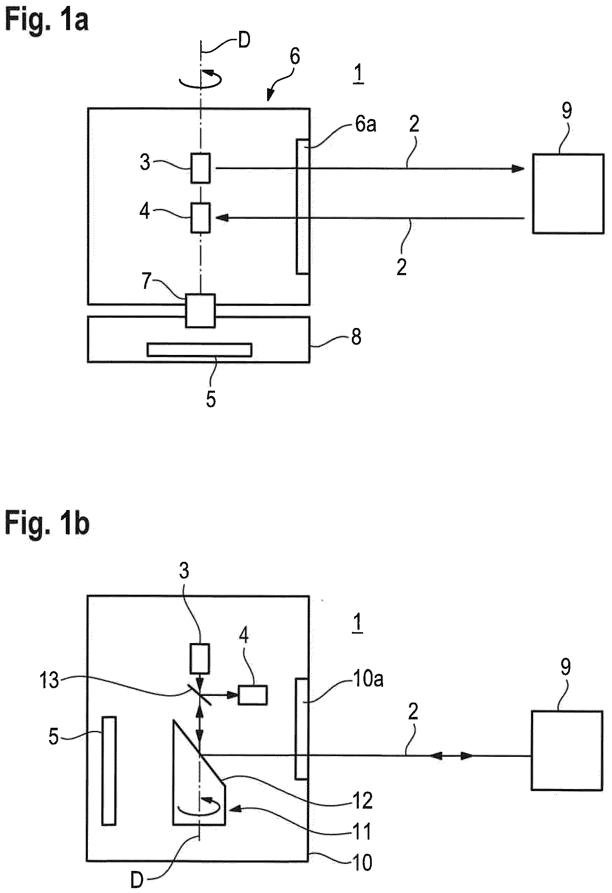

Figur 1a zeigt ein erstes Ausführungsbeispiel des erfindungsgemäßen optischen Sensors 1. Der optische Sensor 1 ist als Flächendistanzsensor ausgebildet, wobei dieser als Sensoreinheit einen Distanzsensor mit einem Lichtstrahlen 2 emittierenden Sender 3 und einem Lichtstrahlen 2 empfangenden Empfänger 4 aufweist. Der Sender 3 ist in Form einer Laserdiode ausgebildet, die von einem nicht dargestellten Lasertreiber angesteuert wird. Mit dem Distanzsensor erfolgt eine Distanzmessung nach einem Impulslaufzeitverfahren. Hierzu emittiert der Sender 3 Lichtstrahlen 2 in Form von Lichtimpulsen.

Die Auswertung der Sensorsignale des Distanzsensors erfolgt in einer Auswerteeinheit 5. Für den Fall, dass der optische Sensor 1 als Sicherheitssensor ausgebildet ist, weist die Auswerteeinheit 5 einen redundanten Aufbau auf, beispielsweise in Form zweier sich gegenseitig zyklisch überwachender Rechnereinheiten.

Die Lichtstrahlen 2 des Senders 3 werden periodisch in einen flächigen Erfassungsbereich geführt. Hierzu sind im vorliegenden Fall der Sender 3 und der Empfänger 4 in einem rotierenden Messkopf 6 untergebracht, dessen Seitenwand eine transparente Frontscheibe 6a aufweist, durch welche die Lichtstrahlen 2 geführt sind. Der Messkopf 6 ist mit einer Drehlagerung 7 auf einem stationären Sockel 8 gelagert. Durch einen nicht dargestellten Antrieb wird der Messkopf 6 um eine mit der Symmetrieachse des Messkopfs 6 zusammenfallenden Drehachse D gedreht. Durch diese Drehbewegung überstreichen die Lichtstrahlen 2 periodisch eine senkrecht zur Drehachse D orientierte Ebene, die den Erfassungsbereich bildet. Je nach Ausführung des optischen Sensors 1 kann der Erfassungsbereich auch nur einen Teilbereich einer Vollumdrehung von 360° umfassen. Der Sender 3 und der Empfänger 4 sind über gegebenenfalls berührungslos arbeitende Zuleitungsmittel in der Drehlagerung 7 an die Auswerteeinheit 5 angeschlossen.

Zur Detektion eines Objekts 9 wird die Laufzeit der Lichtstrahlen 2 des Senders 3 zum Objekt 9 und zurück zum Empfänger 4 ermittelt, woraus die Objektdistanz ermittelt wird. Zusätzlich wird die aktuelle Drehstellung des Messkopfs 6 erfasst. Damit kann die Position des Objekts 9 innerhalb des Erfassungsbereichs bestimmt werden.

Figur 1b zeigt eine Variante der Ausführungsform gemäß Figur 1a des erfindungsgemäßen optischen Sensors 1. Der optische Sensor 1 ist wiederum als Flächendistanzsensor ausgebildet, der entsprechend zur Ausführungsform gemäß Figur 1a einen Distanzsensor mit einem Sender 3 und Empfänger 4 sowie eine Auswerteeinheit 5 aufweist.

Der optische Sensor 1 gemäß Figur 1b unterscheidet sich vom optischen Sensor 1 gemäß Figur 1a nur hinsichtlich der Strahlablenkung der Lichtstrahlen 2. Bei der Ausführungsform der Figur 1b sind der Sender 3 und der Empfänger 4 wie auch die Auswerteeinheit 5 in einem Gehäuse 10 stationär angeordnet, wobei in der Seitenwand des Gehäuses 10 eine transparente Frontscheibe 10a ist, durch welche die Lichtstrahlen 2 geführt sind.

Zur Strahlablenkung der Lichtstrahlen 2 ist im Gehäuse 10 eine motorisch getriebene Ablenkeinheit 11 vorgesehen, die einen Umlenkspiegel 12 aufweist, der um eine senkrecht verlaufende Drehachse D drehbar ist. Damit werden die vom Sender 3 emittierten Lichtstrahlen 2 in einer den Erfassungsbereich bildenden, senkrecht zur Drehachse D verlaufenden Ebene abgelenkt. Die vom Objekt 9 zurückreflektierten Lichtstrahlen 2 verlaufen koaxial zu den vom Sender 3 emittierten Lichtstrahlen 2. Der koaxiale Strahlverlauf wird mittels eines Strahlteilerspiegels 13 erzielt. Je nach Größe der Frontscheibe 10a kann der Erfassungsbereich auf einen Winkelbereich kleiner als 360° begrenzt werden.

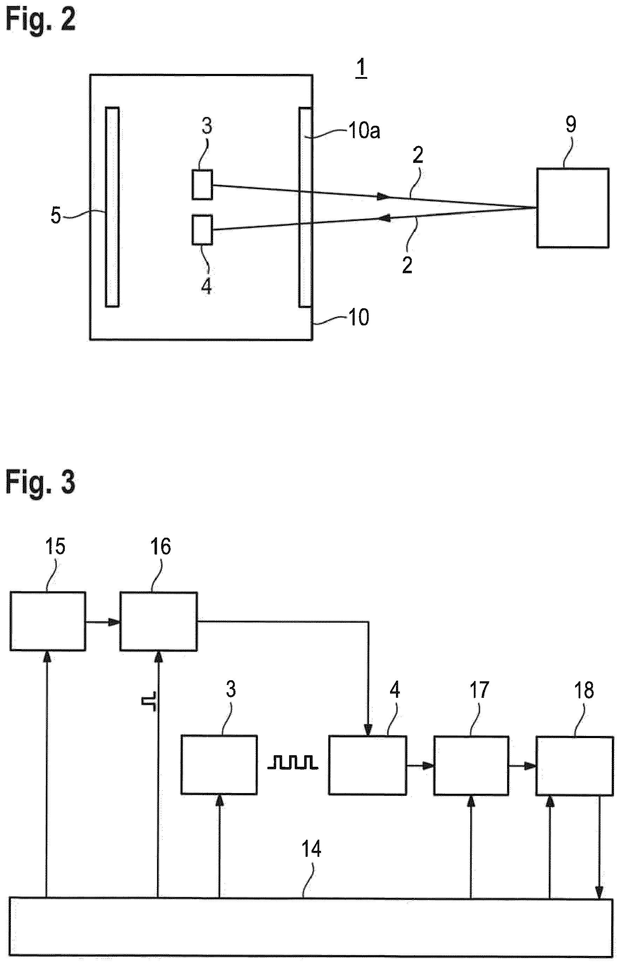

Figur 2 zeigt ein weiteres Ausführungsbeispiel des optischen Sensors 1. Die Auswerteeinheit 5 sowie der Sender 3 und Empfänger 4 sind wieder stationär im Gehäuse 10 angeordnet, in deren Seitenwand die Frontscheibe 10a vorgesehen ist. Im Gegensatz zur Ausführungsform gemäß Figur 1b ist auch das Gehäuse 10 stationär angeordnet, d.h. der optische Sensor 1 emittiert Lichtimpulse in eine fest vorgegebene Richtung.

Bei dem optischen Sensor 1 der Figuren 1 und 2 ist vorteilhaft der Empfänger 4 ein SiPM (Silizium-Photomultiplier).

Alternativ ist der Empfänger 4 eine APD (Avalanche-Photodiode).

Weiterhin ist es möglich, dass der Empfänger 4 eine SPAD (Einzelphoton-Avalanche-Diode) ist.

Insbesondere bei dem optischen Sensor 1 gemäß Figur 2 kann anstatt eines einzelnen Empfängers 4 ein Empfänger-Array mit mehreren Empfängern 4 vorgesehen sein.

Figur 3 zeigt ein Blockschaltbild des optischen Sensors 1 gemäß den Figuren 1 und 2. Der Sender 3 und Empfänger 4 sind an eine Rechnerstruktur 14 als Bestandteil der Auswerteeinheit 5 angeschlossen. Die Rechnerstruktur 14 besteht aus zwei sich zyklisch überwachenden Rechnereinheiten, falls der optische Sensor 1 ein Sicherheitssensor ist. Ansonsten besteht die Rechnerstruktur 14 aus einer einzelnen Rechnereinheit.

Die Rechnerstruktur 14 gibt die Vorspannung 15 für den Empfänger 4 vor. Über die Vorspannung 15 kann eine Auslöschpuls-Einkopplung 16 für den Empfänger 4 erfolgen. Die Auslöschpuls-Einkopplung 16 bildet zusammen mit der Rechnerstruktur 14 die elektronischen Diskriminatormittel aus. Das analoge Empfangssignal des Empfängers 4 wird in einem Verstärker 17 verstärkt und dann einem Komparator 18 zugeführt und schließlich in die Rechnerstruktur 14 eingelesen. Die Rechnerstruktur 14 gibt einen Schwellwert für den Komparator 18 vor. Ebenso gibt die Rechnerstruktur 14 die Verstärkung des Verstärkers 17 vor.

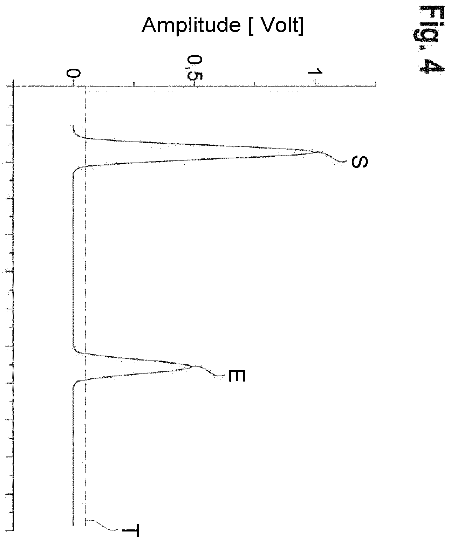

Die Funktion des optischen Sensors 1 gemäß Figur 3 wird im Folgenden anhand der Figuren 4 bis 6 erläutert.

Figur 4 veranschaulicht das Prinzip der nach einem Impuls-Laufzeit-Verfahren erfolgenden Distanzmessung.

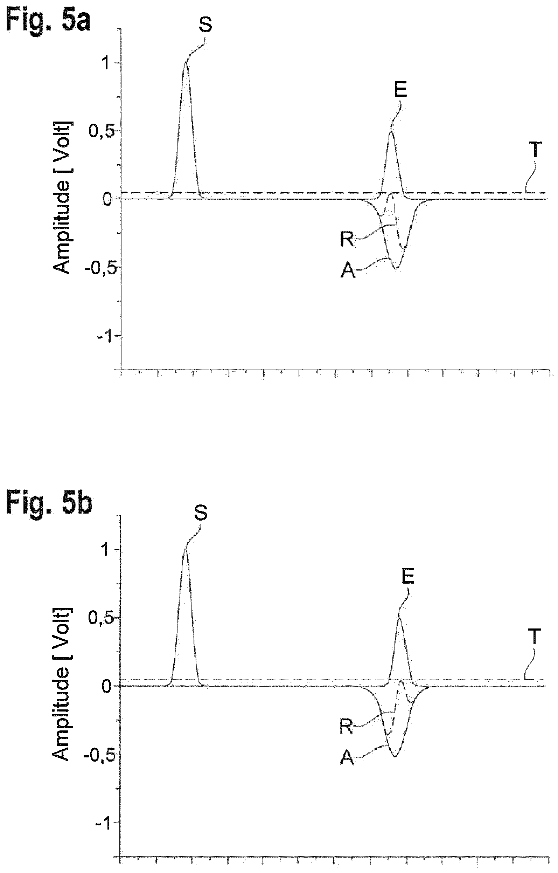

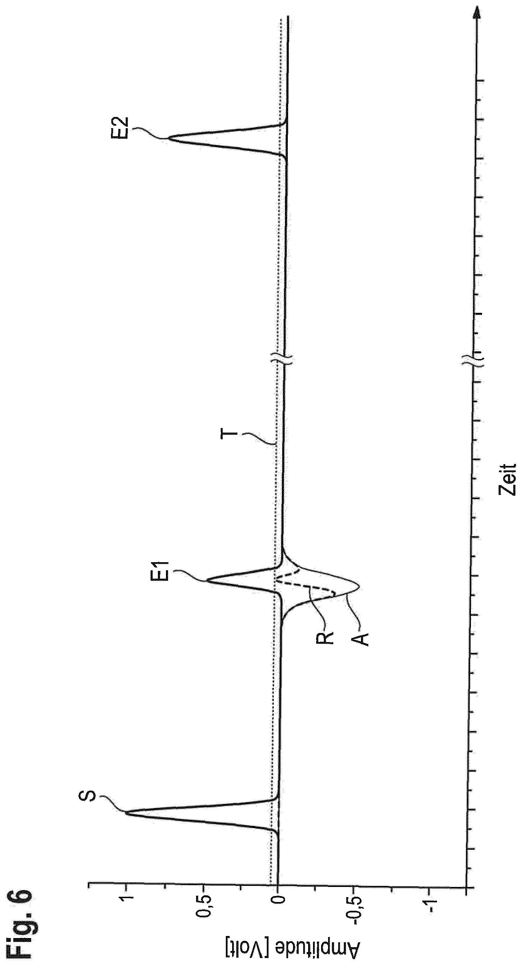

Figur 4 zeigt, wie auch die Figuren 5a, 5b, 6 den zeitlichen Verlauf des analogen Empfangssignals am Ausgang des Empfängers 4, das auf das Aussenden eines Lichtimpulses erhalten wird. Als Referenz ist zudem der entsprechende Sendepuls S, d.h. der Lichtimpuls zum Zeitpunkt des Aussendens am Sender 3 dargestellt.

Der ausgesendete Lichtimpuls trifft auf ein Objekt 9 und wird von dort zum Empfänger 4 geführt. Entsprechend der Objektdistanz trifft der Lichtimpuls verzögert auf den Empfänger 4 und generiert im analogen Empfangssignal einen Empfangssignalpuls E. Der Empfangssignalpuls E wird in der Auswerteeinheit 5 dadurch erkannt, dass dessen Amplitude die Triggerschwelle T, d.h. den Schwellwert des Komparators 18 überschreitet. Aus der Laufzeitdifferenz zwischen Sendepuls S und Empfangssignalpuls E wird in der Auswerteeinheit 5, d.h. in der Rechnerstruktur 14 die Objektdistanz ermittelt.

Erfindungsgemäß können Empfangssignalpulse E vom analogen Empfangssignal ausgeblendet werden, so dass diese in der Auswerteeinheit 5 nicht mehr ausgewertet werden.

Damit können einerseits optische Störsignale ausgeblendet werden.

Andererseits können bestimmte Distanzbereiche ausgeblendet werden, so dass in diesen keine Objektdetektion erfolgt.

Die Figuren 5a, 5b zeigen das Prinzip einer Ausblendung eines Empfangssignalpulses E.

Mit den elektronischen Diskriminatormitteln, insbesondere der Auslöschpuls-Einkopplung 16 wird ein Auslöschpuls A generiert, der vom Empfangssignalpuls E so überlagert wird, dass dieser ausgelöscht wird. Der Auslöschpuls A wird aus einem Ansteuersignal des Senders 3, insbesondere einem Signal wie einem SYNC-Signal oder Delayed-Laser-Signal des Lasertreibers generiert. Dabei wird der Auslöschpuls A so verzögert, beispielsweise mittels Ringoszillatoren, dass dieser gleichzeitig mit dem Empfangssignalpuls E des Empfangssignals überlagert wird. Vorteilhaft ist dabei die Pulsbreite, d.h. Zeitdauer, des Auslöschpulses größer als die Pulsbreite des Empfangssignalpulses E, wie die Figuren 5a, 5b zeigen. Dabei weist der Auslöschpuls A eine negative Amplitude auf.

Durch die Überlagerung mit dem Auslöschpuls A wird der Emfangssignalpuls soweit ausgelöscht, dass die Resultierende R aus der Überlagerung des Auslöschpulses A und Empfangssignalpulses E die Triggerschwelle T nicht mehr überschreitet, so dass der Empfangssignalpuls E in der Auswerteeinheit 5 nicht mehr ausgewertet wird.

Für eine Auslöschung des Empfangssignalpulses E ist es nicht erforderlich, dass die Maximazeitpunkte des Empfangssignalpulses E und Auslöschpulses A übereinstimmen, da die Breite des Auslöschpulses A größer ist als die Breite des Empfangssignalpulses E. Bei dem in Figur 5a gezeigten Fall liegt das Maximum des Empfangssignalpulses E vor dem Maximum des Auslöschpulses A. Bei dem in Figur 5b gezeigten Fall liegt das Maximum des Empfangssignalpulses E hinter dem Maximum des Auslöschpulses A.

Mit derartigen Ausblendungen von Empfangssignalpulsen E mittels eines oder mehrerer Auslöschpulsen A können Distanzbereiche derart ausgeblendet werden, dass dort vorhandene Objekte 9 nicht detektiert werden.

Figur 6 zeigt ein Beispiel einer Elimination von Störsignalen. Ein derartiges Störsignal kann z.B. dadurch verursacht sein, dass an der Frontscheibe 6a, 10a ein Teil eines Lichtimpulses zurück zum Empfänger 4 geführt wird. Bei dem in Figur 6 dargestellten Fall enthält das auf einen Sendepuls S erhaltene Empfangssignal zwei Emfangssignalpulse E1 und E2. Der erste Empfangssignalpuls E1 stammt von der Rückreflexion eines Teils des Lichtimpulses an der Frontscheibe 6a, 10a. Der zweite Empfangssignalpuls E2 stammt von einem zu detektierenden Objekt 9.

Der erste Empfangssignalpuls E1 bildet ein Störsignal und wird analog zu den Ausführungsbeispielen der Figuren 5a, 5b eliminiert. Dadurch wird der Empfangssignalpuls E1 nicht ausgewertet und führt auch zu keiner Totzeit der nachgelagerten Auswertung, d.h. die Auswertung kann sofort den ein Nutzsignal bildenden Empfangssignalpuls E2 auswerten um die Objektdistanz zu bestimmen.

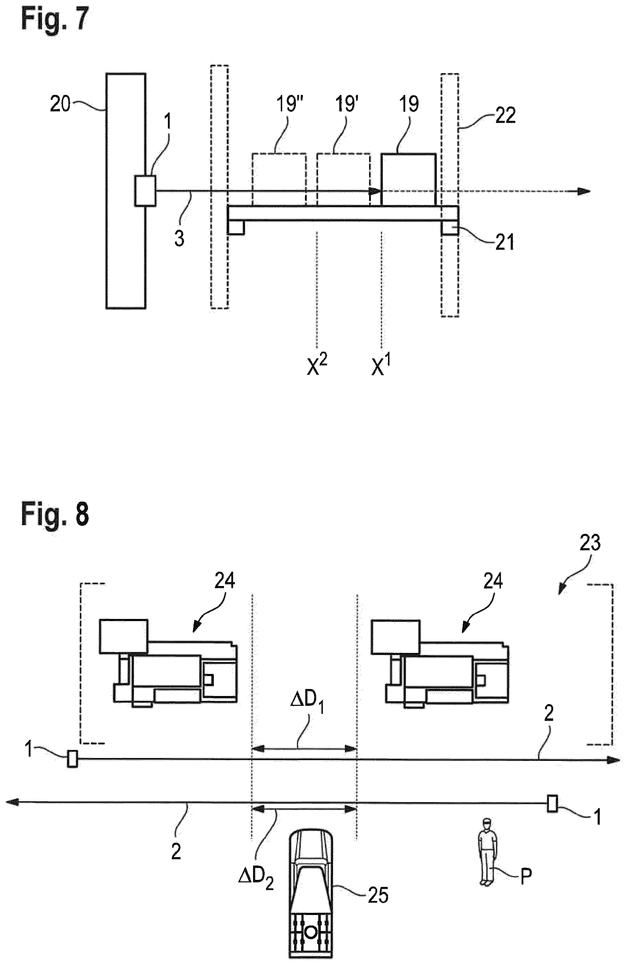

Figur 7 zeigt schematisch ein erstes Applikationsbeispiel des erfindungsgemäßen optischen Sensors 1 gemäß Figur 2. Der optische Sensor 1 wird in diesem Fall zur Positionierung von Objekten 9 wie Kisten 19, 19', 19", in einem Hochregallager eingesetzt.

Der optische Sensor 1 ist an einem Regalbediengerät 20 angeordnet, mit dem Kisten 19, 19', 19", in Regalen 21 des Hochregallagers eingelagert oder aus diesen ausgeführt werden. Der optische Sensor 1 kontrolliert die Lagerung der Kisten 19, 19', 19", in vorgegebenen Sollpositionen x1, x2 vor einer Wand 22.

Mit dem erfindungsgemäßen optischen Sensor 1 erfolgt dabei eine Hintergrundausblendung derart, dass der Entferungsbereich der Wand 22 ausgeblendet wird, so dass nur noch die Positionen der Kisten 19, 19', 19", mit dem optischen Sensor 1 erfasst werden.

Figur 6 zeigt eine weitere Applikation, bei der zwei als Sicherheitssensoren ausgebildete optische Sensoren 1 gemäß Figur 2 eine Gefahrenbereichsüberwachung durchführen.

Mit zwei optischen Sensoren 1 wird ein Zugang zu einem Gefahrenbereich 23 überwacht, in dem sich zwei gefahrbringende Anlagen 24 befinden. Die optischen Sensoren 1 sind an gegenüberliegenden Rändern des Zugangs so angeordnet, dass die Strahlachsen der Lichtstrahlen 2 parallel zueinander verlaufen.

Wird im normalen Überwachungsbetrieb mit den beiden optischen Sensoren 1 ein sicherheitskritisches Objekt 9 wie z.B. eine Person P detektiert, generieren die optischen Sensoren 1 Ausgangssignale mit denen eine Sicherheitsfunktion ausgelöst wird. Im vorliegenden Fall besteht die Sicherheitsfunktion darin, die Anlagen 24 stillzusetzen.

Damit ein Transportfahrzeug 25 als zulässiges, nicht sicherheitskritisches Objekt 9 den Anlagen 24 Arbeitsmaterial zuführen kann, ohne dass die optischen Sensoren 1 eine Sicherheitsfunktion auslösen, ist eine Muting-Funktion vorgesehen. Die Muting-Funktion sieht vor, dass für die optischen Sensoren 1 Distanzbereiche ΔD₁ bzw. ΔD₂ ausgeblendet werden. Diese Ausblendung erfolgt mittels der elektronischen Diskriminatormittel analog zu den Ausführungsbeispielen gemäß der Figuren 5a, 5b.

Die ausgeblendeten Distanzbereiche ΔD₁, ΔD₂ sind so bemessen, dass das Transportfahrzeug 25 durch den von den Distanzbereichen der ΔD₁, ΔD₂ gebildeten Korridor fahren kann. Da in den ausgeblendeten Bereichen ΔD₁, ΔD₂ keine Objektdetektion mittels der optischen Sensoren 1 erfolgt, wird keine Sicherheitsfunktion ausgelöst, wenn das Transportfahrzeug 25 den Korridor passiert. Diese Muting-Funktion wird nun temporär aktiviert und zwar für eine Zeit, die an die Transferzeit, die das Transportfahrzeug 25 zum Passieren des Korridors benötigt, angepasst ist.

### Bezugszeichenliste

- 1: Sensor
- 2: Lichtstrahlen
- 3: Sender
- 4: Empfänger
- 5: Auswerteeinheit
- 6: Messkopf
- 6a: Frontscheibe
- 7: Drehlagerung
- 8: Sockel
- 9: Objekt
- 10: Gehäuse
- 10a: Frontscheibe
- 11: Ablenkeinheit
- 12: Umlenkspiegel
- 13: Strahlteilerspiegel
- 14: Rechnerstruktur
- 15: Vorspannung
- 16: Auslöschpuls-Einkopplung
- 17: Verstärker
- 18: Komparator
- 19: Kiste
- 19': Kiste
- 19": Kiste
- 20: Regalkodiergerät
- 21: Regal
- 22: Wand
- 23: Gefahrenbereich
- 24: Anlage
- 25: Transportfahrzeug
- x1, x2: Sollposition

- A: Auslöschpuls
- D: Drehachse
- E: Empfangssignalpuls
- R: Resultierende
- S: Sendepuls
- T: Triggerschwelle

## Patentansprüche

1. Optischer Sensor (1) mit einem Lichtimpulse emittierenden Sender (3) und einem Lichtimpulse empfangenden Empfänger (4), und mit einer Auswerteeinheit (5), in welcher aus der Laufzeit von Lichtimpulsen zu einem Objekt (9) und zurück zum Empfänger (4) eine Objektdistanz ermittelt wird, **dadurch gekennzeichnet, dass** elektronische Diskriminatormittel vorhanden sind, mittels derer in einem am Ausgang des Empfängers (4) anstehenden analogen Empfangssignal ein Empfangssignalpuls (E) aus einer Folge von Empfangssignalpulsen (E), die durch einen Lichtimpuls des Sensors (1) generiert sind, ausblendbar sind.

2. Optischer Sensor (1) nach Anspruch 1, **dadurch gekennzeichnet, dass** mittels der elektronischen Diskriminatormittel ein Auslöschpuls (A) generiert wird, wobei der Empfangssignalpuls (E) durch Überlagerung mit dem Auslöschpuls (A) ausgelöscht wird.

3. Optischer Sensor (1) nach Anspruch 2, **dadurch gekennzeichnet, dass** der Auslöschpuls (A) eine größere Pulsbreite als der Empfangssignalpuls (E) aufweist.

4. Optischer Sensor (1) nach einem der Ansprüche 2 oder 3, **dadurch gekennzeichnet, dass** der Auslöschpuls (A) aus einem Ansteuersignal des Senders (3) generiert wird, und/oder dass der Auslöschpuls (A) über eine Vorspannung (15) des Empfängers (4) einkoppelbar ist.

5. Optischer Sensor (1) nach Anspruch 4, **dadurch gekennzeichnet, dass** der Auslöschpuls (A) in den elektronischen Diskriminatormitteln verzögert wird.

6. Optischer Sensor (1) nach Anspruch 5, **dadurch gekennzeichnet, dass** zur Verzögerung des Auslöschpulses (A) Ringoszillatoren vorgesehen sind.

7. Optischer Sensor (1) nach Anspruch 1, **dadurch gekennzeichnet, dass** der Empfangssignalpuls (E) durch eine Variation einer Verstärkung des Empfangssignals ausblendbar ist, oder dass die Ausblendung eines Empfangspulses oberhalb einer Triggerschwelle (T) in einem vorgegebenen Zeitintervall durch die Dämpfung des Empfängers (4) erfolgt.

8. Optischer Sensor (1) nach Anspruch 7, **dadurch gekennzeichnet, dass** die Dämpfung des Empfängers (4) durch die betragsmäßige Absenkung dessen Bias-Vorspannung erfolgt.

9. Optischer Sensor (1) nach Anspruch 1, **dadurch gekennzeichnet, dass** ein Empfangssignalpuls dadurch ausgeblendet wird, dass er in der Auswerteeinheit nicht weiterverarbeitet wird.

10. Optischer Sensor (1) nach einem der Ansprüche 1 bis 9, **dadurch gekennzeichnet, dass** mittels den elektronischen Diskriminatormitteln mehrere Empfangssignalpulse (E) ausblendbar sind.

11. Optischer Sensor (1) nach einem der Ansprüche 1 bis 10, **dadurch gekennzeichnet, dass** durch Ausblendung eines oder mehrerer Empfangssignalpulse (E) Objekte (9) in einem oder mehreren Distanzfenstern nicht erkannt werden.

12. Optischer Sensor (1) nach einem der Ansprüche 1 bis 11, **dadurch gekennzeichnet, dass** mittels den elektronischen Diskriminatormitteln eine Hintergrundausblendung und/oder eine Hintergrundausblendung durchführbar ist.

13. Optischer Sensor (1) nach einem der Ansprüche 1 bis 12, **dadurch gekennzeichnet, dass** dessen Komponenten in einem Gehäuse (10) mit einer Frontscheibe (6a, 10a) integriert sind, wobei die Lichtimpulse durch die Frontscheibe (6a, 10a) geführt sind, wobei durch Rückreflexionen von Lichtimpuls-Anteilen an der Frontscheibe (6a, 10a) generierte Empfangssignalpulse (E) mittels den elektronischen Diskriminatormitteln ausgeblendet werden.

14. Optischer Sensor (1) nach einem der Ansprüche 1 bis 13, **dadurch gekennzeichnet, dass** durch Ausblendung von Empfangssignalpulsen (E) mittels den elektronischen Diskriminatormitteln Muting-Bereiche generierbar sind.

15. Optischer Sensor (1) nach einem der Ansprüche 1 bis 14, **dadurch gekennzeichnet, dass** dieser ein Distanzsensor ist, bei welchem die Lichtimpulse entlang einer feststehenden Strahlachse emittiert werden, oder dass dieser ein Flächendistanzsensor ist, bei welchem die Lichtimpulse periodisch innerhalb eines flächigen oder räumlichen Überwachungsbereichs geführt werden.

16. Optischer Sensor (1) nach einem der Ansprüche 1 bis 15, **dadurch gekennzeichnet, dass** der Empfänger (4) ein SiPM (Silizium-Photomultiplier), eine APD (Avalanche-Photodiode) oder eine SPAD (Einzelphoton-Avalanche-Diode) ist.

17. Optischer Sensor (1) nach einem der Ansprüche 1 bis 16, **dadurch gekennzeichnet, dass** dieser mehrere Empfänger (4) aufweist, die ein Empfänger-Array bilden.
